# EUROPEAN PATENT SPECIFICATION

(11) **EP 2 091 127 B1**
(45) Date of publication and mention of the grant of the patent: **11.05.2011**
(21) Application number: 08425085.1
(22) Date of filing: 12.02.2008
(51) Int. Cl.: H02J 7/14

(54) **System and method for the electric energy management on board a motor-vehicle and for displaying information relating to the management**
System und Verfahren zum Energiemanagement in einem Kraftfahrzeug und zum Anzeigen von den Energiemanagement betreffende Informationen
Système et méthode de gestion de l'énergie électrique à bord d'un véhicule à moteur et d'affichage d'informations relatives à la gestion

(43) Date of publication of application: 19.08.2009
(73) Proprietor: Magneti Marelli S.p.A., 20011 Corbetta (MI) (IT)
(72) Inventor: Nepote, Andrea, 10078 Venaria Reale (Torino) (IT); Giraudo, Gabriele, 10078 Venaria Reale (Torino) (IT)
(74) Representative: Notaro, Giancarlo

(56) References cited:
- EP-A- 0 811 757
- EP-A- 1 129 892
- EP-A- 1 256 476
- EP-A- 1 953 058
- WO-A-00/04620
- WO-A-97/48164
- FR-A- 2 811 271
- JP-A- 2000 287 302
- US-A1- 2005 274 553

## Description

The present invention concerns a system and a method to manage electric energy on board a motor-vehicle and to display information relating to that management.

The arrangement of a system of the type indicated above is already known, in particular in a hybrid motor-vehicle, including at least one internal combustion engine, a plurality of on-board electric devices, an electric battery to supply said electric devices with power, an alternator activated by the engine to charge the battery and at least one on-board electronic control unit to control the engine and said electric devices. In particular, it has already been proposed (see W094/16304) to arrange in a motor-vehicle of the above type electronic means of control for the management of electric energy, which receives signals from devices sensing the state of the battery, from devices sensing the operative condition of the vehicle and of the engine, as well as signals relating to navigation data of the motor-vehicle, and that draws up a strategy for managing the electric energy on board the motor-vehicle based on said signals. In the previously-proposed solution, means are also provided to display data concerning the state of the battery and/or the operative conditions of the vehicle and/or of the engine and/or said management strategy.

With an increased energy requirement on board the motor-vehicle, the alternator may find itself in a condition of energy deficit that must be compensated for by the battery. In such a situation, the battery runs down, with the consequent risk that if it reaches an insufficient energy level, the user is no longer able to start the engine after having stopped. With the goal of maintaining the battery at a sufficient energy level, it is possible to provide for different interventions, such as for example raising the engine's idling rate of revolution, or intervening on the alternator and/or cutting the connection between the battery and one or more unessential electric loads, in such a manner as to increase the power supply from the alternator and/or to lighten the motor-vehicle's energy requirement.

The purpose underlying the present invention is that of making available a system and a method of the type specified above whereby the optimal management strategy of the electric energy on board the motor-vehicle can be determined, as well as defining how the system must interact with the driver with regard to displaying information relating to the management and entering data into the system indicating the preferences of the user with regard to the criteria to be privileged in defining such a strategy.

The system known from WO94/16304 is capable of verifying the present state of the battery and advising the driver concerning the choice of route such as to guarantee the maintenance of a sufficient state of charge, also considering the presence of any electric recharging control units.

A system and a method according to the preambles of claims 1 and 6 are disclosed in EP-A-1 256 476, EP-A-1 129 892 and WO 97/48164 A.

The present invention has in particular the goal of ensuring the maintenance of an adequate state of charge in such a manner as to have minimum impact on the driver with regard to the vehicle's performance and to the functions of comfort and entertainment. Neither does the system intervene on planned decisions concerning the route.

In view of achieving these and further purposes, the present invention has as its subject a system and a method as set forth in claims 1 and 6.

In particular, the system according to the invention provides for means of measurement to detect and/or calculate over time the battery's temperature, voltage and current, as well as electronic means to receive the output signals from said means of measurement and determine the state of charge, the state of health and the state of function of the battery, both on the basis of present data, and on the basis of data measured at a series of prior instants.

The state of the battery of a motor-vehicle is in general defined from the battery's state of charge (SOC), its state of health (SOH), and its state of function (SOF) that indicates the extent to which the battery may be capable of properly performing its task, particularly of starting the motor-vehicle's engine.

Thus, in the case of the invention, management of the electric energy on board the motor-vehicle is determined not only on the basis of an instantaneous datum point, relating to the state of the battery at the instant considered, but also on the basis of the prior history of the state of the battery.

According to a further characteristic of the invention, said electronic means of control (9) are predisposed to determine a prediction of the future state of the battery based on data relating to the present state and to the prior history of the state of the battery, as well as on data from an on-board navigation system, relating to the route selected by the user to reach the destination.

The electronic means of control for the management of electric energy on board the motor-vehicle is capable of determining a management strategy on the basis, that is to say, of data relating to the past history, to the present condition and to the predictable future state of the battery.

According to a further characteristic of the invention, the electronic means of control, as a function of the chosen management strategy, control one or more of the following operations:
-- cut the connection between the battery and one or more of the electric devices powered by it, so as to decrease the motor-vehicle's energy requirement (for example it may switch the air conditioning off),
- alter the idling rate of revolution of the internal combustion engine (the number of revolutions of the engine per minute may be raised to increase the electric power supplied by the alternator), and
- act on the alternator (the excitation of the alternator may be varied so as to increase the power that it supplies).

Again according to the invention, the means of display is predisposed to receive data relating to the selected management strategy from said electronic means of control and to receive data that can be inserted by the user concerning which information it is desired to display and in what form that information must be displayed.

According to the invention, means are provided whereby the electric energy management can be set to send data to the electronic means of control indicative of a preferred type of strategy from among a plurality of specific strategies, including a first strategy that privileges minimisation of energy consumption ("environment-oriented" strategy) and a second strategy that privileges maximisation of performance ("performance-oriented" strategy).

As was already indicated above, a fundamental difference of the system according to the invention compared to the known technology lies in the fact that the best management strategy for electric energy on board the motor-vehicle is chosen taking into account not only the present situation, but also the past situation and the future situation.

An example of a strategic choice depending on the prior state of the battery may be as follows: the battery of the motor-vehicle is running down but the present state of charge is sufficient. In itself, this would make it possible to gradually reduce intervention of the management system until it was completely eliminated. However, if historical data relating to current, voltage and temperature values of the battery indicate that the battery has been excessively stressed by the switching on of high-power impulsive loads in the recent past, the electronic means of control will decide to extend the time needed to reconnect all on-board electric devices, so as to distribute over time the power requirement, and thus give the battery time to re-establish itself electrochemically.

Vice versa, if the battery has been relatively little stressed in the recent past and the state of charge is sufficient, it is possible to consent that the loads be reconnected as requested by the driver without further delay.

Similarly, some examples may be given in which the electric energy management system takes into account the predictable future state of the battery. For example, it may happen that the battery is running down and the state of charge is critical. According to the baseline strategy, in such conditions it would be necessary to gradually increase intervention by the management system, putting in place one or more of the operations it controls (raising the idling rate, cutting out electric loads, acting on the alternator). However, the information relating to the route to be followed shows that the vehicle will soon enter the motorway, so that it is predictable that the battery will recharge. In these conditions, the system will for example decide not to activate any intervention and not to signal the problem to the user.

A further example of a situation in which the predictable future state of the battery will be taken into account is that in which the battery is running down and the state of charge is critical. In principle it would be necessary to gradually increase intervention by the management system. However, information relating to the future route show that the destination will soon be reached, so that the battery would not have time to recharge. In this case, the system decides for example to rapidly increase intervention in order to make available a high current entering into the battery to recharge it as quickly as possible.

Naturally, these are only some examples of how the system according to the invention can guarantee optimal management of the electric energy on board the motor-vehicle involving the least possible disturbance for the user and without in any way influencing the user's decisions concerning driving and the route.

Further characteristics and advantages of the invention will become clear from the description that follows with reference to the attached drawings, provided as a simple non-limiting example, in which:
- figure 1 is a diagram illustrating the interactions between the engine of the motor-vehicle, the relative alternator, the on-board electronic control unit, the battery, the various on-board electric devices and the electric energy management systems according to the invention, and
- figure 2 is further block diagram illustrating the general configuration of the principle of the system according to the invention.

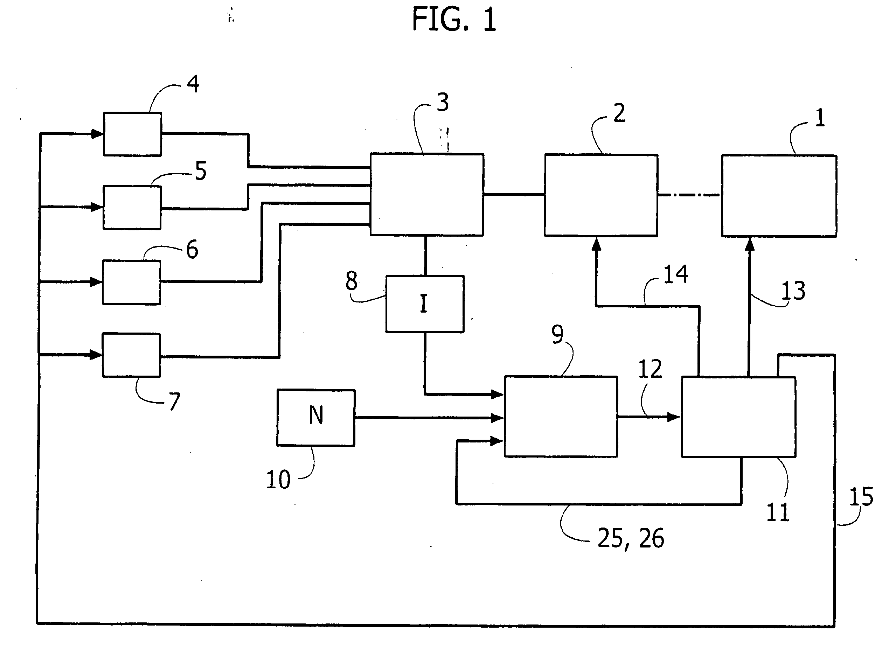

In figure 1, reference number 1 indicates an internal combustion engine in charge of the traction of a motor-vehicle. According to the conventional technique, the engine 1 that causes to rotate the alternator 2 that provides for recharging the battery 3 on board the motor-vehicle, which in its turn provides a supply of electric energy for a plurality of on-board electric devices 4, 5, 6, 7. Means of measurement 8, of themselves of known type, are associated to the battery 3 to detect the values of current, voltage, temperature of the battery 3 and, on the basis of said data, to elaborate signals indicating the state of the battery that are sent to an EEM unit 9 for the management of electric energy on board the vehicle. This unit (that may for example be a dedicated unit or may coincide with one of the electronic control units with which the motor-vehicle is normally equipped) also receives data concerning navigation from a navigation system 10 installed on board the motor-vehicle, indicative among others of the vehicle's future route, as well as data from the on-board electronic control unit 11 of the motor-vehicle, indicative of the operative conditions of the engine and of the motor-vehicle. As will be seen in detail below, on the basis of the data received, the management unit 9 decides upon a management strategy and sends command signals 12 to the control unit 11 to generate in consequence a signal 13 to command variations in the idling rate of the engine and/or a signal 14 to act on the functioning of the alternator and/or a signal 15 to act on the connection between the battery 3 and the electric devices 4-7 powered by it.

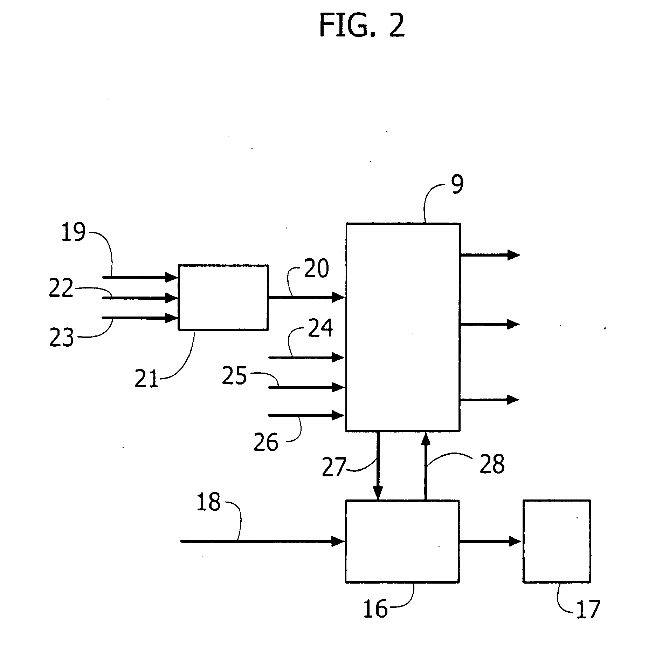

Figure 2 shows specifically the electric energy management unit 9 of the system according to the invention and a unit 16 associated to it to interface with the user that provides for displaying the requested data on a display unit 17 and that is predisposed to receive signals 18 indicative of the settings desired by the user both with regard to display criteria on the display unit 17 and in reference to criteria concerning the electric energy management by the management unit 19.

The management unit 9 receives as input the following data: a signal 20 that carries the information relating to the voltage, current and temperature of the battery as well as the state of the battery (SOC, SOH and SOF) elaborated by a unit 21 on the basis of a predetermined algorithm, as a function of the signal 19 indicative of the value of current and of signals 22 and 23 indicative of the temperature and voltage of the battery. The system is also provided with storage devices (not shown in figure 2 as they are considered to be incorporated within the unit 9) to store the prior "history" of the state of the battery. The unit 9 is also predisposed to receive signals 24 from a navigation system 10 (figure 1) relating to navigation data and in particular to the future route, to the type of road to be followed, to the time remaining to destination. The unit 9 is also predisposed to receive signals 25, 26 (see also figure 1) from the on-board electronic control unit 11, indicative of the operative conditions of the engine and of the vehicle, such as for example the number of electric devices connected to the battery, the engine rate of revolution, etc.

The management unit 9 also receives signals 28 generated by the interface unit 16 based on the settings entered by the user, indicative of the preferred electric energy management strategy. For example, the user may choose to adopt a strategy that privileges minimising the energy system ("environment-oriented" strategy) whereby there is a tendency first to disconnect electric loads and then, if necessary, to increase the idling rate of the engine, or a strategy that privileges maximising performance ("performance-oriented" strategy) whereby there is a tendency to first increase the idling rate of the engine and then, if necessary, to disconnect electric loads.

Based on the data received, the management unit 9 is capable for example of determining whether the battery is charging or running down, whether the situation is critical, whether it is possible to intervene on connections between the battery 3 and electric loads 4-7, whether it is possible to intervene on the idling rate of revolution of the engine, whether it is possible to act on the alternator, whether the predicted future situation will be worse or better and what are the user's preferences.

In consequence, the management unit 9 is capable of acting in the best manner, that is of guaranteeing battery function with a minimum impact from the standpoint of performance. Information concerning the state of the realisation block is sent to the interface unit 16 to be displayed if required on the display unit 17.

With regard to the display strategy, the interface unit receives from the management unit 9 signals 27 indicative of the chosen management strategy and signals 18 indicative of the settings entered by the user. The settings entered by the user that concern the realisation strategy are sent onward to the management unit 9, whereas the settings entered by the user that concern display modalities are used, together with the information 28 relating to the electric energy management, to decide what to display and how to display it. For example, the user may decide the amount of information to be displayed (minimum, intermediate, full).

Data processing and realisation and display strategies are achieved employing mathematical models and/or finite state machines and/or tables.

An example of an embodiment of the system according to the invention might be as follows: the management unit 9 receives as input the following data:
-- battery current,
-- SOC,
-- vehicle data,
-- propulsion unit data,
-- user settings.

Said input data are processed as follows:
-- battery current: it is determined whether it is entering the battery or leaving the battery;
-- SOC: it is determined whether this is sufficient or insufficient;
-- user's choices: the user chooses from among minimum, intermediate and full display. The data concerning the vehicle or the propulsion unit serve for example to determine whether it is possible to intervene on the electric loads of the battery, on the alternator and/or on the engine idling rate.

The block that effects the realisation strategy may be synthesised as a table of the following type:

| Battery current | SOC | Management unit |
|---|---|---|
| INCOMING | SUFFICIENT | OFF |
| OUTGOING | INSUFFICIENT | ACTIVE |
| OUTGOING | SUFFICIENT | OFF |
| INCOMING | INSUFFICIENT | ACTIVE |

The above table means that if the battery is in a condition of insufficient SOC, intervention by the management unit 9 is requested to return the battery to a charged condition. If the SOC is sufficient the system will decide to reduce intervention of the management unit 9 until it is completely shut off. On the basis of the vehicle data, the data from the propulsion unit and the user settings, the system will decide to intervene on electric loads, on the alternator and/or on the idling rate.

The block that effects the display strategy receives as input information relating to intervention by the management unit and to user settings. The information relating to management by the unit 9 may for example concern the critical level of the present situation. On the basis of the user preferences, the system will decide whether to display that information and how to do so. If for example three critical levels were provided for, the following situation could for example come about:
- minimum display: only indicates if the situation is at high critical level,
- intermediate display: indicates whether the situation is at high or average critical level;
-- full display: indicates every situation.

If we add information relating to the prior history of the state of the battery (stored values of current, voltage and temperature, SOH and SOF) it is possible to decide to modify both the realisation strategy of the management unit 9 (for example to extend or to reduce the interval for reconnection of the loads 4-7) and the management information 27 sent to the unit 16 (for example to modify the critical level).

The following are some examples of strategies depending on the prior history of the state of the battery:
-- the battery is running down but the state of charge is sufficient. According to the table used by the unit 9 the intervention of the unit 9 could gradually be reduced until it was completely cut out. From historical data concerning current, voltage and temperature it is seen that the battery was excessively stressed by switching on high-power impulsive loads in the recent period and thus the system decides to extend the interval before reconnecting the loads so as to distribute the power requirement over time, and thus give the battery time to re-establish itself from the electrochemical standpoint.
-- The battery is running down, but the state of charge is sufficient. According to the table, intervention by the management unit 9 could be gradually reduced until it was completely cut out. From historical data concerning current, voltage and temperature, it appears that the battery was relatively little stressed in the recent period and thus it is possible to consent to reconnecting loads as requested by the driver without further delay.

Adding information relating to the future state, for example navigation data, a prediction can be determined concerning the future state of the battery. Also in this case it is possible to decide to modify both the realisation strategy of the management unit 9 (for example to anticipate or postpone intervention by the unit) and information relating to the management (27) sent to the unit 16 (for example the critical level is modified).

The following are some possible examples of strategies depending on the future state:
- the battery is running down and the state of charge is critical. According to the table it would be necessary to gradually increase intervention by the management unit 9. Information relating to the route indicates that it is planned to enter the motorway in 15 minutes and thus the battery will be able to recharge. In this case it is possible, for example, to decide not to activate the unit 9, and not to signal the problem to the user.
-- the battery is running down and the state of charge is critical. According to the table it would be necessary to gradually increase intervention by the unit 9. From information relating to the route it is predicted that the destination will be reached in 15 minutes and thus that the battery will not have time to recharge. In this case it is possible, for example, to decide to increase intervention by the management unit 9 rapidly in order to have a high current entering the battery, to recharge it as quickly as possible.

Naturally, the principal of the invention holding good, construction details and embodiments may be widely varied with regard to what is described and illustrated as a simple example, without thereby departing from the sphere of the present invention.

## Claims

1. System for the management of electric energy on board a motor-vehicle comprising at least one internal combustion engine (1), a plurality of on-board electric devices (4-7), an electric battery (3) to power said electric devices (4-7), an alternator (2) driven by the engine (1) to charge the battery (3) and at least one on-board electronic control unit (11) to control the engine (1) and said electric devices (4-7), said system comprising:
-- electronic means of control (9) for the management of electric energy (EEM) on board the motor vehicle, that receives signals (20) from devices (8) capable of sensing the state of the battery, signals (25, 26) of the operative conditions of the vehicle and the engine, as well as signals (24) relating to navigation data of the vehicle, and that determines a strategy for the management of electric energy on board the motor vehicle on the basis of said signals,
wherein said system is **characterised in that** said electronic means of control (9) is predisposed to receive and process data relating to the present state of the battery (3), data relating to the prior history of the state of the battery, as well as data relating to a prediction of the future state of the battery,
said system being **characterised in that** it comprises means (17) to display data relating to the state of the battery and/or to the operative conditions of the vehicle and/or of the engine and/or to said management strategy, and **in that** means for setting the electric energy management is provided (16) to send to said electronic means of control (9) data (28) indicative of a preferred type of strategy from a plurality of strategies, wherein said means of setting is predisposed to enable a preferred strategy to be selected from a first strategy that privileges minimising energy consumption, whereby intervention occurs first on the connection between the battery and the electric devices (4-7) and subsequently if necessary on the idling rate of the engine, and a second strategy that privileges maximising performance, whereby the idling rate of the engine is first increased and subsequently, if necessary, intervention occurs on the connection between the battery (3) and the electric devices (4-7) powered by it.

2. System according to claim 1, **characterised in that** it includes:
-- means of measurement (8) to detect and/or calculate over time the temperature, voltage and current of the battery (3),
- auxiliary electronic means (21) to receive signals (19, 22, 23) in output from said means of measurement (8) and determine the state of charge (SOC), the state of health (SOH) and the state of function (SOF) of the battery (3), both on the basis of present data, and on the basis of data relating to a series of prior instants, said auxiliary electronic means (21) being predisposed to send to said electronic means of control (9) signals (20) indicative of the state of the battery thus determined.

3. System according to claim 1, **characterised in that** said electronic means of control (9) is predisposed to determine a prediction of the future state of the battery (3) on the basis of data relating to the present state and to be prior history of the state of the battery, as well as data, originating from an on-board navigation system (10), relating to the route selected by the user to reach the destination.

4. System according to claim 1, **characterised in that** said electronic means of control (9) is predisposed to control, as a function of the chosen management strategy, one or more of the following operations:
-- to cut or restore the connection between the battery (3) and one or more electric devices (4-7) powered by it;
-- to vary the idling rate of revolution of the internal combustion engine;
-- to act on the alternator.

5. System according to claim 1, **characterised in that** said means of display (16, 17) is predisposed to receive data (27) relating to be selected management strategy from said electronic means of control (9) and data (18) that can be entered by the user concerning which information it is desired to display and in what form it must be displayed.

6. Method for the management of electric energy on board a motor-vehicle comprising at least one internal combustion engine (1), a plurality of on-board electric devices (4-7), an electric battery (3) to power said electric devices (4-7), an alternator (2) driven by the engine (1) to charge the battery (3) and at least one on-board electronic control unit (11) to control the engine (1) and said electric devices (4-7),
in which the following are also provided for on board the motor vehicle:
- electronic means of control (9) to manage the electric energy (EEM) on board the motor-vehicle, that receives signals from devices sensing the state of the battery (3), from devices sensing the operative conditions of the vehicle and of the engine, as well as signals relating to navigation data of the motor-vehicle and that determines a strategy for managing the electric energy on board the motor-vehicle on the basis of said signals,
through said electronic means of control (9) a strategy is determined for management of the electric energy on board the motor-vehicle, on the basis of data relating to the present state of the battery (3), and on the basis of data relating to the prior history of the state of the battery (3) as well as on the basis of data relating to the prediction of the future state of the battery (3), said method being **characterised in that** data relating to the state of the battery and/or to the operative conditions of the vehicle and/or of the engine and/or to said management strategy are displayed by means (16,17) further provided for on board the motor vehicle, and **in that** data indicative of a type of strategy preferred by the user from among a plurality of predetermined strategies are sent to said electronic means of control (9), wherein the predetermined strategies that can be selected by the user include a first strategy that privileges minimising energy consumption, whereby action is taken first on the connection between the battery and the electric devices (4-7) and subsequently if necessary on the idling rate of the engine, and a second strategy that privileges maximising performance, whereby action is first taken on the idling rate of the engine and subsequently, if necessary, on the connection between the battery (3) and the electric devices (4-7) powered by it.

7. Method according to claim 8, **characterised in that** the temperature, voltage and current of the battery are detected and/or calculated over time and that on the basis of the data thus detected, the state of charge (SOC), the state of health (SOH) and the state of function (SOF) of the battery are determined taking into account both the present data and data relating to a series of prior instants.

8. Method according to claim 8, **characterised in that** a prediction is determined concerning the future state of the battery on the basis of data relating to the present state and to the prior history of the state of the battery, as well as of data from an on-board navigation system (10), relating to the route selected by the user to reach the destination.

9. Method according to claim 8, **characterised in that** in function of the selected management strategy one or more of the following operations is performed:
-- cut off or restore the connection between the battery (3) and one or more electric devices (4-7) powered by it,
-- vary the idling rate of revolution of the internal combustion engine;
-- act on the alternator.

10. Method according to claim 8, **characterised in that** both data relating to the management selected via said electronic means of control (9) and data entered by the user in connection with which information it is desired to display and in what form it should be displayed are sent to said means of display.

## Patentansprüche

1. System für das Management von elektrischer Energie in einem Kraftfahrzeug, welches mindestens einen Verbrennungsmotor (1), eine Vielzahl von an Bord befindlichen elektrischen Vorrichtungen (4-7), eine elektrische Batterie (3) zum Speisen der elektrischen Vorrichtungen (4-7), einen vom Motor (1) angetriebenen Generator (2) zum Laden der Batterie (3) und mindestens eine an Bord befindliche elektronische Steuereinheit (11) zum Steuern des Motors (1) und der elektrischen Vorrichtungen (4-7) aufweist, wobei das System aufweist:
- eine elektronische Steuerungseinrichtung (9) für das Management von elektrischer Energie (EEM) im Kraftfahrzeug, die Signale (20) von Vorrichtungen (8), die fähig sind, den Zustand der Batterie zu erfassen, Signale (25, 26) über die Betriebsbedingungen des Fahrzeugs und des Motors sowie Signale (24) in Bezug auf Navigationsdaten des Fahrzeugs empfängt und eine Strategie für das Management elektrischer Energie im Kraftfahrzeug auf der Basis dieser Signale bestimmt,
wobei das System **dadurch gekennzeichnet ist, dass** die elektronische Steuerungseinrichtung (9) dazu geeignet ist, Daten in Bezug auf den gegenwärtigen Zustand der Batterie (3), Daten in Bezug auf die bisherige Entwicklung des Zustandes der Batterie sowie Daten in Bezug auf eine Vorhersage des zukünftigen Zustandes der Batterie zu empfangen und zu verarbeiten,
wobei das System **dadurch gekennzeichnet ist, dass** es eine Einrichtung (17) zum Anzeigen von Daten in Bezug auf den Zustand der Batterie und/oder in Bezug auf die Betriebsbedingungen des Fahrzeugs und/oder des Motors und/oder in Bezug auf die Managementstrategie aufweist, und **dadurch**, dass eine Einrichtung zum Einstellen des Energiemanagements (16) bereitgestellt wird, um zur elektronischen Steuerungseinrichtung (9) Daten (28) zu senden, die auf eine bevorzugte Art der Strategie aus einer Vielzahl von Strategien hinweisen, wobei die Einrichtung zum Einstellen dazu geeignet ist, die Auswahl einer bevorzugten Strategie aus einer ersten Strategie, bei der die Minimierung des Energieverbrauchs Vorrang hat, wodurch ein Eingriff zuerst an der Verbindung zwischen der Batterie und den elektrischen Vorrichtungen (4-7) und anschließend, wenn nötig, an der Leerlaufdrehzahl des Motors geschieht, und einer zweiten Strategie zu ermöglichen, bei der die Maximierung der Leistung Vorrang hat, wodurch zuerst die Leerlaufdrehzahl des Motors erhöht wird und anschließend, wenn nötig, ein Eingriff an der Verbindung zwischen der Batterie (3) und den von ihr gespeisten elektrischen Vorrichtungen (4-7) geschieht.

2. System gemäß Anspruch 1, **dadurch gekennzeichnet, dass** es besitzt:
- eine Messeinrichtung (8), um die Temperatur, die Spannung und den Strom der Batterie (3) über die Zeit zu detektieren und/oder zu berechnen,
- elektronische Hilfseinrichtungen (21), um Signale (19, 22, 23) als Ausgang von der Messeinrichtung (8) zu empfangen und den Ladezustand (SOC), den Alterungszustand (SOH) und die Gebrauchstüchtigkeit (SOF) der Batterie (3) sowohl auf der Basis gegenwärtiger Daten als auch auf der Basis von Daten in Bezug auf eine Reihe früherer Zeitpunkte zu bestimmen, wobei die elektronische Hilfseinrichtung (21) dazu geeignet ist, Signale (20), die auf den so bestimmten Zustand der Batterie hinweisen, zur elektronischen Steuerungseinrichtung (9) zu senden.

3. System gemäß Anspruch 1, **dadurch gekennzeichnet, dass** die elektronische Steuerungseinrichtung (9) dazu geeignet ist, eine Vorhersage über den zukünftigen Zustand der Batterie (3) auf der Basis von Daten in Bezug auf den gegenwärtigen Zustand und die bisherige Entwicklung des Zustandes der Batterie sowie auf der Basis von Daten, die aus einem Bordnavigationssystem (10) stammen, in Bezug auf die vom Anwender gewählte Route zum Erreichen das Fahrziels zu treffen.

4. System gemäß Anspruch 1, **dadurch gekennzeichnet, dass** die elektronische Steuerungseinrichtung (9) dazu geeignet ist, abhängig von der gewählten Managementstrategie einen oder mehr der folgenden Vorgänge zu steuern:
- Unterbrechen oder Wiederherstellen der Verbindung zwischen der Batterie (3) und einer oder mehr der von ihr gespeisten elektrischen Vorrichtungen (4-7);
- Ändern der Leerlaufdrehzahl des Verbrennungsmotors;
- Wirken auf den Generator.

5. System gemäß Anspruch 1, **dadurch gekennzeichnet, dass** die Anzeigeeinrichtungen (16, 17) dazu geeignet sind, Daten (27) in Bezug auf die ausgewählte Managementstrategie aus der elektronischen Steuerungseinrichtung (9) und Daten (18), die vom Anwender eingegeben werden können, darüber, welche Informationen angezeigt werden sollen und in welcher Form sie angezeigt werden müssen, zu empfangen.

6. Verfahren für das Management von elektrischer Energie in einem Kraftfahrzeug, das mindestens einen Verbrennungsmotor (1), eine Vielzahl von an Bord befindlichen elektrischen Vorrichtungen (4-7), eine elektrische Batterie (3) zum Speisen der elektrischen Vorrichtungen (4-7), einen vom Motor (1) angetriebenen Generator (2) zum Laden der Batterie (3) und mindestens eine an Bord befindliche elektronische Steuereinheit (11) zum Steuern des Motors (1) und der elektrischen Vorrichtungen (4-7) aufweist,
wobei außerdem Folgendes an Bord des Kraftfahrzeugs bereitgestellt wird:
- eine elektronische Steuerungseinrichtung (9) zum Managen der elektrischen Energie (EEM) im Kraftfahrzeug, die Signale von Vorrichtungen, die den Zustand der Batterie (3) erfassen, von Vorrichtungen, welche die Betriebsbedingungen des Fahrzeugs und des Motors erfassen, sowie Signale in Bezug auf Navigationsdaten des Kraftfahrzeugs empfängt und die eine Strategie für das Managen der elektrischen Energie im Kraftfahrzeug auf der Basis dieser Signale bestimmt,
- bei dem durch die elektronische Steuerungseinrichtung (9) eine Strategie für das Management der elektrischen Energie im Kraftfahrzeug auf der Basis von Daten in Bezug auf den gegenwärtigen Zustand der Batterie (3) und auf der Basis von Daten in Bezug auf die bisherige Entwicklung des Zustandes der Batterie (3) sowie auf der Basis von Daten in Bezug auf die Vorhersage des zukünftigen Zustandes der Batterie (3) bestimmt wird, wobei das Verfahren **dadurch gekennzeichnet ist, dass** Daten in Bezug auf den Zustand der Batterie und/oder in Bezug auf die Betriebsbedingungen des Fahrzeugs und/oder des Motors und/oder in Bezug auf die Managementstrategie durch Einrichtungen (16, 17) angezeigt werden, die ferner an Bord des Fahrzeugs bereitgestellt werden, und **dadurch**, dass Daten, die auf eine vom Anwender bevorzugte Art der Strategie aus einer Vielzahl vorher bestimmter Strategien hinweisen, zur elektronischen Steuerungseinrichtung (9) gesendet werden, wobei die vorher bestimmten Strategien, die vom Anwender ausgewählt werden können, eine erste Strategie, bei der die Minimierung des Energieverbrauchs Vorrang hat, wodurch eine Maßnahme zuerst an der Verbindung zwischen der Batterie und den elektrischen Vorrichtungen (4-7) und anschließend, wenn nötig, an der Leerlaufdrehzahl des Motors getroffen wird, und eine zweite Strategie einschließen, bei der die Maximierung der Leistung Vorrang hat, wodurch eine Maßnahme zuerst an der Leerlaufdrehzahl des Motors und anschließend, wenn nötig, an der Verbindung zwischen der Batterie (3) und den von ihr gespeisten elektrischen Vorrichtungen (4-7) getroffen wird.

7. Verfahren gemäß Anspruch 6, **dadurch gekennzeichnet, dass** die Temperatur, die Spannung und der Strom der Batterie über die Zeit detektiert und/oder berechnet werden und dass auf der Basis der so detektierten Daten der Ladezustand (SOC), der Alterungszustand (SOH) und die Gebrauchstüchtigkeit (SOF) der Batterie unter Berücksichtigung sowohl der gegenwärtigen Daten als auch von Daten in Bezug auf eine Reihe früherer Zeitpunkte bestimmt werden.

8. Verfahren gemäß Anspruch 6, **dadurch gekennzeichnet, dass** eine Vorhersage des zukünftigen Zustandes der Batterie auf der Basis von Daten in Bezug auf den gegenwärtigen Zustand und auf die bisherige Entwicklung des Zustandes der Batterie sowie auf der Basis von Daten, die aus einem Bordnavigationssystem (10) stammen, in Bezug auf die vom Anwender gewählte Route zum Erreichen das Fahrziels getroffen wird.

9. Verfahren gemäß Anspruch 6, **dadurch gekennzeichnet, dass** abhängig von der gewählten Managementstrategie einer oder mehr der folgenden Vorgänge durchgeführt werden:
- Unterbrechen oder Wiederherstellen der Verbindung zwischen der Batterie (3) und einer oder mehr der von ihr gespeisten elektrischen Vorrichtungen (4-7),
- Ändern der Leerlaufdrehzahl des Verbrennungsmotors;
- Wirken auf den Generator.

10. Verfahren gemäß Anspruch 6, **dadurch gekennzeichnet, dass** sowohl Daten in Bezug auf das über die elektronische Steuerungseinrichtung (9) gewählte Management als auch vom Anwender eingegebene Daten darüber, welche Informationen angezeigt werden sollen und in welcher Form sie angezeigt werden sollen, zur Anzeigeeinrichtung gesendet werden.

## Revendications

1. Système pour la gestion de l'énergie électrique à bord d'un véhicule à moteur comprenant au moins un moteur à combustion interne (1), une pluralité de dispositifs électriques embarqués (4-7), une batterie électrique (3) pour l'alimentation desdits dispositifs électriques (4-7), un alternateur (2) actionné par le moteur (1) pour charger la batterie (3) et au moins une unité de commande électronique embarquée (11) pour commander le moteur (1) et lesdits dispositifs électriques (4-7), ledit système comprenant:
-- des moyens électroniques de commande (9) pour la gestion de l'énergie électrique (EEM) à bord du véhicule automobile, qui reçoivent des signaux (20) provenant de dispositifs (8) capables de détecter l'état de la batterie, des signaux (25, 26) des conditions opératoires du véhicule et du moteur, ainsi que des signaux (24) concernant les données de navigation du véhicule, et qui déterminent une stratégie pour la gestion de l'énergie électrique à bord du véhicule automobile sur la base desdits signaux,
tandis que ledit système est **caractérisé en ce que** lesdits moyens électroniques de commande (9) sont agencés pour recevoir et traiter des données concernant l'état présent de la batterie (3), des données concernant l'historique antérieur de l'état de la batterie, ainsi que des données concernant une prédiction de l'état futur de la batterie,
ledit système étant **caractérisé en ce qu'**il comprend des moyens (17) pour l'affichage de données concernant l'état de la batterie et/ou les conditions opératoires du véhicule et/ou du moteur et/ou ladite stratégie de gestion, et **en ce que** des moyens pour mettre en place la gestion de l'énergie électrique sont procurés (16) pour envoyer auxdits moyens électroniques de commande (9) des données (28) indicatrices d'un type préféré de stratégie parmi une pluralité de stratégies, tandis que lesdits moyens de mise en place sont agencés pour permettre à une stratégie préférée d'être choisie à partir d'une première stratégie qui privilégie la minimisation de la consommation d'énergie, l'intervention s'effectuant d'abord sur la connexion entre la batterie et les dispositifs électriques (4-7) et subséquemment si nécessaire sur l'allure de ralenti du moteur, et d'une deuxième stratégie qui privilégie la performance de maximisation, l'allure de ralenti du moteur étant d'abord augmentée et subséquemment, si nécessaire, une intervention se produisant sur la connexion entre la batterie (3) et les dispositifs électriques (4-7) alimentés par elle.

2. Système selon la revendication 1, **caractérisé en ce qu'**il comprend:
- des moyens de mesure (8) pour détecter et/ou calculer en fonction du temps la température, la tension et le courant de la batterie (3),
- des moyens électroniques auxiliaires (21) pour recevoir des signaux (19, 22, 23) en sortie desdits moyens de mesure (8) et déterminer l'état de charge (SOC), l'état de santé (SOH) et l'état de fonctionnement (SOF) de la batterie (3), aussi bien sur la base des données présentes que sur la base des données concernant une série d'instants antérieurs, lesdits moyens électroniques auxiliaires (21) étant agencés pour envoyer auxdits moyens électroniques de commande (9) des signaux (20) indicateurs de l'état de la batterie ainsi déterminé.

3. Système selon la revendication 1, **caractérisé en ce que** lesdits moyens électroniques de commande (9) sont agencés pour déterminer une prédiction de l'état futur de la batterie (3) sur la base de données relatives à l'état présent et à l'historique antérieur de l'état de la batterie, ainsi que des données, provenant d'un système de navigation embarqué (10), concernant la voie choisie par l'utilisateur pour atteindre la destination.

4. Système selon la revendication 1, **caractérisé en ce que** lesdits moyens électroniques de commande (9) sont agencés pour commander, en fonction de la stratégie de gestion choisie, une ou plusieurs des opérations suivantes:
-- coupure ou restauration de la connexion entre la batterie (3) et un ou plusieurs dispositifs électriques (4-7) alimentés par elle;
-- variation de l'allure du ralenti auquel tourne le moteur à combustion interne;
-- action sur l'alternateur.

5. Système selon la revendication 1, **caractérisé en ce que** lesdits moyens d'affichage (16, 17) sont agencés pour recevoir des données (27) concernant la stratégie de gestion sélectionnée à partir desdits moyens électroniques de commande (9) et des données (18) qui peuvent être entrées par l'utilisateur et qui concernent l'information qu'il est souhaitable d'afficher et sous quelle forme elle doit être affichée.

6. Procédé pour la gestion de l'énergie électrique à bord d'un véhicule à moteur comprenant au moins un moteur à combustion interne (1), une pluralité de dispositifs électriques embarqués (4-7), une batterie électrique (3) pour alimenter lesdits dispositifs électriques (4-7), un alternateur (2) actionné par le moteur (1) pour charger la batterie (3) et au moins une unité de commande électronique embarquée (11) pour commander le moteur (1) et lesdits dispositifs électriques (4-7),
dans lequel ce qui suit est également procuré à bord du véhicule à moteur:
- des moyens électroniques de commande (9) pour la gestion de l'énergie électrique (EEM) à bord du véhicule à moteur, qui reçoivent des signaux provenant de dispositifs détectant l'état de la batterie (3), de dispositifs détectant les conditions opérationnelles du véhicule et du moteur, ainsi que des signaux concernant les données de navigation du véhicule à moteur, et qui déterminent une stratégie pour la gestion de l'énergie électrique à bord du véhicule à moteur sur la base desdits signaux,
tandis que par l'intermédiaire desdits moyens électroniques de commande (9) une stratégie est déterminée pour la gestion de l'énergie électrique à bord du véhicule à moteur, sur la base de données concernant l'état présent de la batterie (3), et sur la base de données concernant l'historique antérieur de l'état de la batterie (3), ainsi que sur la base de données concernant la prédiction de l'état futur de la batterie (3),
ledit procédé étant **caractérisé en ce que** les données concernant l'état de la batterie et/ou les conditions opérationnelles du véhicule et/ ou du moteur et/ou relatives à la stratégie de gestion sont affichées par des moyens (16, 17) qui sont en outre procurés à bord du véhicule à moteur, et **en ce que** des données indicatrices d'un type de stratégie préférée par l'utilisateur parmi une pluralité de stratégies prédéterminées sont envoyées auxdits moyens électroniques de commande (9), tandis que les stratégies prédéterminées qui peuvent être sélectionnées par l'utilisateur comprennent une première stratégie qui privilégie la minimisation de la consommation d'énergie, tandis que l'action est mise en oeuvre d'abord sur la connexion entre la batterie et les dispositifs électriques (4-7) et subséquemment si nécessaire sur l'allure de ralenti du moteur, et une deuxième stratégie qui privilégie la maximisation de la performance, l'action étant d'abord engagée sur l'allure de ralenti du moteur et subséquemment, si nécessaire, sur la connexion entre la batterie (3) et les dispositifs électriques (4-7) alimentés par elle.

7. Procédé selon la revendication 6, **caractérisé en ce que** la température, la tension et le courant de la batterie sont détectés et/ ou calculés en fonction du temps et que sur la base des données ainsi détectées, l'état de charge (SOC), l'état de santé (SOH) et l'état de fonctionnement (SOF) de la batterie, sont déterminés avec prise en compte à la fois des données présentes et des données concernant une série d'instants antérieurs.

8. Procédé selon la revendication 6, **caractérisé en ce qu'**une prédiction est déterminée concernant l'état futur de la batterie sur la base de données concernant l'état présent et l'historique antérieur de l'état de la batterie, ainsi que de données provenant d'un système de navigation embarquée (10), concernant la route choisie par l'utilisateur pour atteindre la destination.

9. Procédé selon la revendication 6, **caractérisé en ce que**, en fonction de la stratégie de gestion choisie, une ou plusieurs des opérations suivantes est mise en oeuvre:
-- coupure ou restauration de la connexion entre la batterie (3) et un ou plusieurs dispositifs électriques (4-7) alimentés par elle,
-- variation de l'allure de ralenti du moteur à combustion interne;
-- action sur l'alternateur.

10. Procédé selon la revendication 6, **caractérisé en ce qu'**à la fois des données relatives à la gestion choisie via lesdits moyens électroniques de commande (9) et des données entrées par l'utilisateur en relation avec l'information qu'il est souhaitable d'afficher et sous quelle forme elle doit être affichée, sont envoyées auxdits moyens d'affichage.
